# EUROPEAN PATENT APPLICATION

(11) **EP 4 567 948 A1**
(43) Date of publication of application: **11.06.2025**
(21) Application number: 24216249.3
(22) Date of filing: 28.11.2024
(51) Int. Cl.: H01M 10/04, H01M 50/209, H01M 50/244, H01M 50/264, H01M 50/289, H01M 50/291, H01M 50/249

(54) **BATTERY PACK, METHOD OF MANUFACTURING SUCH AND APPARATUS FOR MANUFACTURING A BATTERY PACK**

(30) Priority: 04.12.2023 KR 20230173746
(71) Applicant: SAMSUNG SDI CO., LTD., Yongin-si, Gyeonggi-do 17084 (KR)
(72) Inventor: Lee, Chiyoung, 17084 Yongin-si, Gyeonggi-do (KR); Yun, Heesoo, 17084 Yongin-si, Gyeonggi-do (KR); Kwon, Sanghee, 17084 Yongin-si, Gyeonggi-do (KR); Lee, Younglim, 17084 Yongin-si, Gyeonggi-do (KR); Lee, Yeojin, 17084 Yongin-si, Gyeonggi-do (KR); Lee, Byungmin, 17084 Yongin-si, Gyeonggi-do (KR); Na, Youngmi, 17084 Yongin-si, Gyeonggi-do (KR); Kim, Sanghun, 17084 Yongin-si, Gyeonggi-do (KR); Kwon, Chorong, 17084 Yongin-si, Gyeonggi-do (KR); Lee, Wonyeol, 17084 Yongin-si, Gyeonggi-do (KR); Kim, Hyunkyu, 17084 Yongin-si, Gyeonggi-do (KR); Song, Minjeong, 17084 Yongin-si, Gyeonggi-do (KR); Seo, Hyeokjun, 17084 Yongin-si, Gyeonggi-do (KR)
(74) Representative: Gulde & Partner

(57) **Abstract**

A battery pack may include a battery housing having an internal receiving space, a plurality of battery cells accommodated inside the internal receiving space of the battery housing, and arranged in a first direction, an upper cover configured to cover an upper portion of the battery housing, where a guide portion may be formed on an inner wall surface of the battery housing to guide insertion of the plurality of battery cells into the internal receiving space.

## Description

### BACKGROUND

### (a) Field of the Disclosure

The present disclosure relates to a battery pack and an apparatus for manufacturing a battery pack, providing stable insertion and alignment of a plurality of battery cells in a battery housing. The present disclosure further relates to a method of manufacturing a battery pack.

### (b) Description of the Related Art

Secondary batteries are used in devices such as mobile devices, auxiliary electric power devices, or the like.

Secondary batteries are also attracting attention as the main power source for electric vehicles, hybrid electric vehicles, and plug-in hybrid electric vehicles, which have been proposed as an alternative to solve various problems such as air pollution of conventional gasoline or diesel vehicles.

Due to the need for high-output, large-capacity batteries in electric vehicles, and the like, may use battery modules in which multiple battery cells are stacked and then electrically connected in series and parallel.

A battery module includes a plurality of stacked battery cells, and terminals exposed at both ends of each battery cell are electrically connected to provide high voltage.

Battery module pack housings are manufactured using various construction methods at sizes to suit the shape and pack capacity. These battery packs are manufactured by removing module components and inserting a plurality of battery cells into the battery housing to increase internal space efficiency and energy density.

However, there is a problem in that it is not easy to insert a plurality of battery cells into the battery housing, and they may be inserted in a misaligned configuration, which may reduce durability and manufacturing efficiency.

### SUMMARY OF THE DISCLOSURE

The present disclosure provides a battery pack and an apparatus for manufacturing a battery pack having accurately aligned battery cells without an interference with an inner wall surface of a battery housing during the process of inserting a plurality of battery cells into a battery housing.

A battery pack may include a battery housing having an internal receiving space, a plurality of battery cells accommodated in the internal receiving space of the battery housing, and arranged in an arrangement direction, an upper cover configured to cover an upper portion of the battery housing, where a guide portion may be formed on an inner wall surface of the battery housing to guide insertion of the plurality of battery cells into the internal receiving space.

The guide portion may be formed on a pair of opposing side inner wall surfaces of the battery housing, and the plurality of battery cells are interposed between the pair of opposing side inner wall surfaces.

The guide portion may include a guide groove that is formed on one of the inner wall surfaces of the battery housing.

The guide groove may include a first guide groove formed on an inner wall surface of a first side of the pair of opposing side inner wall surfaces of the battery housing, and a second guide groove formed on an inner wall surface of a second side of the pair of opposing side inner wall surfaces.

The first guide groove may have a polygonal groove shape formed in a height direction of the battery housing, formed on the inner wall surface of the first side, and internally provided with an inserter.

The second guide groove may be in a polygonal groove shape formed in the height direction of the battery housing, formed on the inner wall surface of the second side, and internally provided with the inserter.

An apparatus for manufacturing a battery pack by inserting the plurality of battery cells inside battery housing, the apparatus includes a clamping portion including a first gripper configured to be inserted into the battery housing and configured to pressurize a first side of the plurality of battery cells, and a second gripper configured to be inserted into the battery housing and configured to pressurize a second side of the plurality of battery cells, wherein the clamping portion is configured to insert the plurality of battery cells into the internal receiving space of the battery housing, and a pressurizer configured to pressurize upper portions of the plurality of battery cells inserted into the battery housing and thereby align the plurality of battery cells.

The clamping portion may include the first gripper configured to pressurize the first side of the plurality of battery cells, and configured to be inserted inside the first guide groove formed on an inner wall surface of a first side of the battery housing, the second gripper configured to pressurize the second side of the plurality of battery cells, and configured to be inserted inside the second guide groove formed on an inner wall surface of the second side opposed to the first side of the battery housing, and a driver configured to provide a driving force to the first gripper and the second gripper.

The driver may be a cylinder member having a rod connected to the first gripper and the second gripper.

The pressurizer may include a pressurizing block configured to be liftable above the battery housing, and configured to be lowered to pressurize the upper portions of the plurality of battery cells, and a lift driver configured to provide a lifting force to the pressurizing block.

The lift driver may be a cylinder member having a rod connected to the pressurizing block to provide lifting force.

A friction pad may be attached to a bottom surface of the pressurizing block.

The present disclosure further provides a method of manufacturing a battery pack, the method comprising clamping a plurality of battery cells with a first gripper and a second gripper, inserting the plurality of battery cells into an internal receiving space of a battery housing, and pressurizing an upper portion of the plurality of battery cells inserted into the battery housing to align the plurality of battery cells.

In some embodiments, inserting the plurality of battery cells into an internal receiving space of the battery housing comprises inserting the first gripper inside a first guide groove formed on an inner wall surface of a first side of the battery housing, and inserting the second gripper inside a second guide groove formed on an inner wall surface of a second side of the battery housing, the second side being opposite to the first side.

In some embodiments, pressurizing the upper portion of the plurality of battery cells inserted into the battery housing to align the plurality of battery cells comprises lowering a pressurizing block to contact the upper portions of the plurality of battery cells.

In some embodiments, a friction pad is attached to a bottom surface of the pressurizing block.

According to some embodiments, stable insertion of a plurality of battery cells into the battery housing may be possible by the guide operation of the guide portion while the plurality of battery cells are being clamped by a clamping portion, and stable manufacturing of the battery pack and improved durability of the manufactured battery pack may be achieved.

### BRIEF DESCRIPTION OF THE DRAWINGS

FIG. 1 is a perspective view schematically showing a battery pack according to an embodiment.
FIG. 2 is a perspective view schematically showing a battery housing according to an embodiment.
FIG. 3 is a top plan view schematically showing the battery housing of FIG. 2.
FIG. 4 is a cross-sectional view along line A-A of the battery housing of FIG. 2.
FIG. 5 is a side view schematically showing an apparatus for manufacturing a battery pack according to a first embodiment of the present disclosure.
FIG. 6 is a cross-sectional view schematically showing a state in which a plurality of battery cells is inserted inside battery housing by first and second grippers of an apparatus for manufacturing a battery pack of FIG. 5.
FIG. 7 is a cross-sectional view schematically showing a state in which an upper portion of a plurality of battery cells inserted inside battery housing of FIG. 6 is pressurized by a pressurizer.
FIG. 8 is a cross-sectional view schematically showing a state in which a friction pad is attached to a pressurizer of an apparatus for manufacturing a battery pack according to a second embodiment of the present disclosure.

### DETAILED DESCRIPTION

Hereinafter, the present disclosure will be described more fully with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

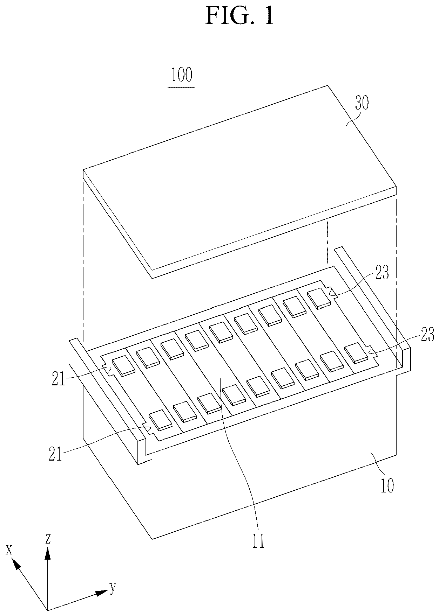

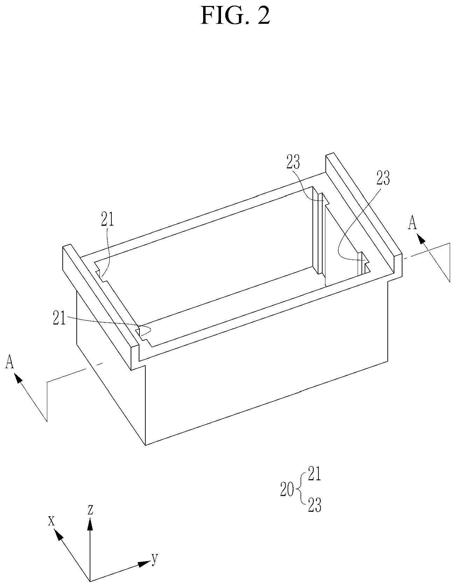

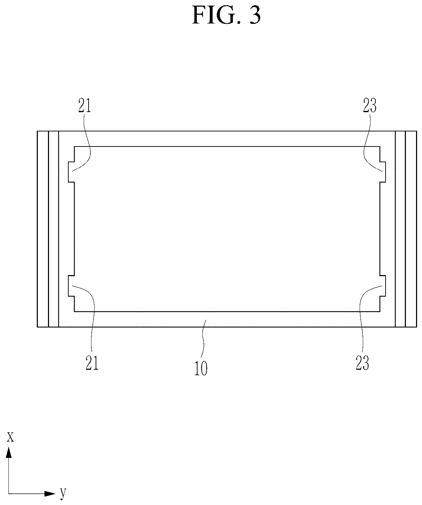

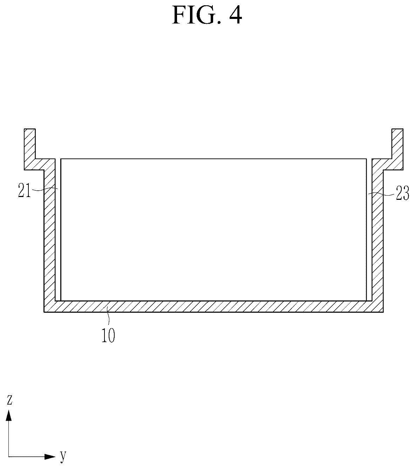

FIG. 1 is a perspective view schematically showing a battery pack according to an embodiment. FIG. 2 is a perspective view schematically showing a battery housing according to an embodiment. FIG. 3 is a top plane view schematically showing the battery housing of FIG. 2. FIG. 4 is a cross-sectional view along line A-A of the battery housing of FIG. 2.

As shown in FIG. 1 to FIG. 4, a battery pack 100 according to an embodiment may include, a battery housing 10 having an internal receiving space, a plurality of battery cells 11 accommodated inside the internal receiving space of the battery housing 10 and arranged in a first (arrangement) direction in the internal receiving space, and an upper cover 30 configured to cover an upper portion of the battery housing 10, where a guide portion 20 may be formed on an inner wall surface of the battery housing 10 to guide insertion of the plurality of battery cells into the internal receiving space.

The battery housing 10 is configured to internally accommodate the plurality of battery cells 11, and the plurality of battery cells 11 may be accommodated while arranged in the first direction. That is, the plurality of battery cells 11 may be accommodated inside battery housing 10, without using a separate side surface frame (not shown).

A cell barrier (not shown) may also be installed inside battery housing 10, such that the plurality of battery cells 11 may be partitioned. The cell barrier may be an insulation plate that partitions the internal receiving space of the battery housing 10 into a plurality of portions.

The plurality of battery cells 11 may be aligned in the first direction (y-axis direction) in the battery housing 10.

The guide portion 20 may be configured to guide insertion of the plurality of battery cells 11 into the internal receiving space formed in the battery housing 10.

A clamping portion 110 may include a first gripper 111 and a second gripper 113. The guide portion 20 may be formed on the inner wall surface of the battery housing 10 and may guide insertion of the first gripper 111 and the second gripper 113 into the internal receiving space formed in the battery housing 10.

The guide portion 20 may be formed on a pair of opposing side inner wall surfaces of the battery housing 10, and the plurality of battery cells 11 may be interposed between the pair of opposing side inner wall surfaces.

As a non-limiting example, the guide portion 20 may be a guide groove formed on the pair of opposing side inner wall surfaces of the battery housing 10, and the plurality of battery cells 11 may be interposed between the pair of opposing side inner wall surfaces. Hereinafter, the same reference numeral is assigned to the guide portion and the guide groove.

As such, a guide groove 20 formed on the inner wall surface of the battery housing 10 may be configured to guide insertion of the clamping portion 110 into the battery housing 10 while clamping the plurality of battery cells 11 during the manufacturing process of the battery pack.

In more detail, the guide groove 20 may include a first guide groove 21 formed on an inner wall surface of a first side of the pair of opposing side inner wall surfaces of the battery housing 10, and a second guide groove 23 formed on inner wall surface of a second side of the pair of opposing side inner wall surfaces of the battery housing 10.

The first guide groove 21 may be formed in a height direction of the inner wall surface of the first side of the battery housing 10. The first guide groove 21 may have a first polygonal groove shape recessed into the inner wall surface of the first side of the battery housing 10.

The first guide groove 21 may be include a pair of grooves spaced apart from each other on the inner wall surface of the first side of the battery housing 10.

The second guide groove 23 may be formed in the height direction of an inner wall surface of a second side of the battery housing 10. The second guide groove 23 may have a second polygonal groove shape recessed into the inner wall surface of the second side of the battery housing 10.

The second guide groove 23 may include a pair of grooves spaced apart from each other on the inner wall surface of the second side of the battery housing 10.

The first and second guide grooves 21 and 23 may have the same or similar shapes, and although the polygonal groove shape is taken as an example, it is not necessarily limited thereto, and the first and second guide grooves 21 and 23 may have a round groove shape to accommodate the shape of the gripper of the clamping portion 110.

The upper cover 30 may be detachably installed on the upper portion of the battery housing 10 and may be detachably coupled by a fastening member such as a bolt member.

As described above, according to the battery pack 100 of the present embodiment, during the manufacturing process, both opposed sides of the plurality of battery cells 11 may be clamped by using the gripper, and during the process of inserting the clamped plurality of battery cells 11 into the battery housing 10, interference of the gripper with the battery housing 10 may be reduced. Therefore, manufacturing quality is improved when the plurality of battery cells 11 are installed inside battery housing 10 and stably aligned in the first direction.

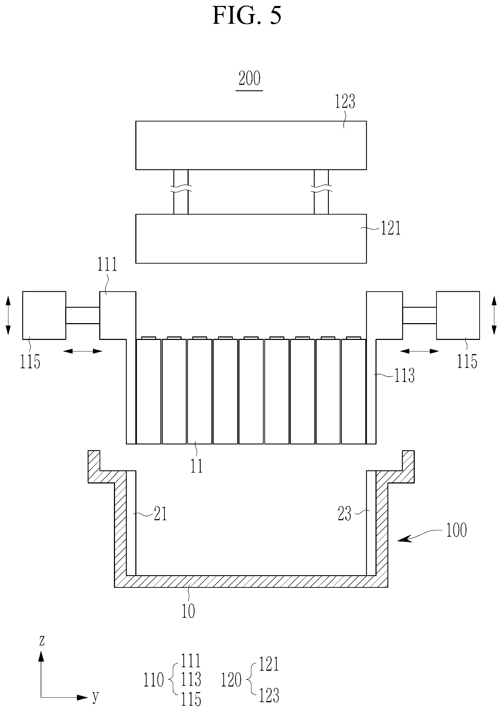

FIG. 5 is a side view schematically showing an apparatus for manufacturing a battery pack according to a first embodiment of the present disclosure. The reference numerals that is the same as in FIG. 1 to FIG. 4 may indicate the same or similar member of the same or similar function. Hereinafter, components having the same reference numeral are not redundantly described in detail.

As shown in FIG. 5, an apparatus for manufacturing a battery pack 200 by inserting a plurality of battery cells 11 into the battery housing 10 may include the clamping portion 110 including the first gripper 111 configured to be inserted into the first guide groove 21 of the battery housing 10 and configured to pressurize a first side of the plurality of battery cells 11 and the second gripper 113 configured to be inserted into the second guide groove 23 and configured to pressurize a second side of the plurality of battery cells 11. The clamping portion 110 may be configured to insert the plurality of battery cells 11 into the internal receiving space of the battery housing 10. The apparatus further includes a pressurizer 120 configured to pressurize upper portions of the plurality of battery cells 11 inserted into the battery housing 10 and align the plurality of battery cells 11.

The clamping portion 110 may be configured to insert the plurality of battery cells 11 into the battery housing 10 in an aligned state, and may be configured to insert the plurality of battery cells 11 into the battery housing 10 while pressurizing opposite sides of the plurality of battery cells 11.

For example, the clamping portion 110 may include the first gripper 111 configured to pressurize the first side of the plurality of battery cells 11, the second gripper 113 configured to pressurize the second side of the plurality of battery cells 11, and a driver 115 configured to provide a driving force to the first gripper 111 and the second gripper 113.

The first gripper 111 may be configured to pressurizing a first side of the plurality of aligned battery cells 11, by the operation of the driver 115.

During the process of inserting the plurality of battery cells 11 into the battery housing 10, the first gripper 111 may be inserted into the first guide groove 21 formed on the inner wall surface of the battery housing 10.

For example, the first gripper 111 may be inserted into the battery housing 10 by the guide operation of the first guide groove 21 and the plurality of battery cells 11 may be stably inserted into the battery housing 10.

The second gripper 113 may be configured to pressurize the second side of the plurality of aligned battery cells 11. The second side is opposite to the first side on which the first gripper 111 is located.

The first gripper 111 and the second gripper 113 may be configured to be lifted by operation of an actuator (not shown) installed on a lifting frame (not shown).

The driver 115 may be connected to the first gripper 111 and the second gripper 113, and the driver 115 may be configured to provide a pressurizing force to the plurality of battery cells 11.

The driver 115 may be a cylinder member configured to provide a pressurizing force to the plurality of battery cells 11. The cylinder member may be configured to be operated pneumatically or hydraulically.

The pressurizer 120 may be configured to pressurize the upper portions of the plurality of battery cells 11 inserted into the battery housing 10 by the clamping portion 110.

For example, the pressurizer 120 may be configured to be liftable above the battery housing 10 and may include a pressurizing block 121 configured to pressurize the upper portions of the plurality of battery cells 11 when the pressurizer 120 is lowered to the plurality of battery cells 11. A lift driver 123 may be configured to provide a lifting force to the pressurizing block 121.

A lower surface of the pressurizing block 121 may be a flat surface, and may be configured to pressurize upper portions of the battery cells 11 to correct misalignment of the plurality of battery cells 11 inserted into the battery housing 10.

The pressurizing block 121 may be connected to the lift driver 123 which can lift and lower the pressurizing block 121 to pressurize the upper portions of the plurality of battery cells 11.

The lift driver 123 may be a cylinder member having a rod connected to an upper portion of the pressurizing block 121 to provide a lifting force. The cylinder member may be configured to be operated pneumatically or hydraulically.

As described above, according to an apparatus for manufacturing a battery pack 200 of the present disclosure, a plurality of battery cells 11 may be stably inserted into the battery housing by operation of the guide portion 20 while the plurality of battery cells 11 are clamped by the clamping portion. As such, stable manufacturing of the battery pack and improved durability of the manufactured battery pack is achieved.

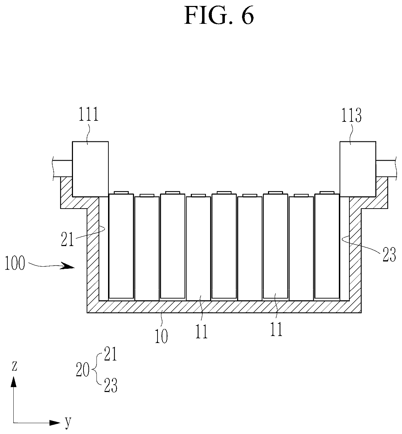

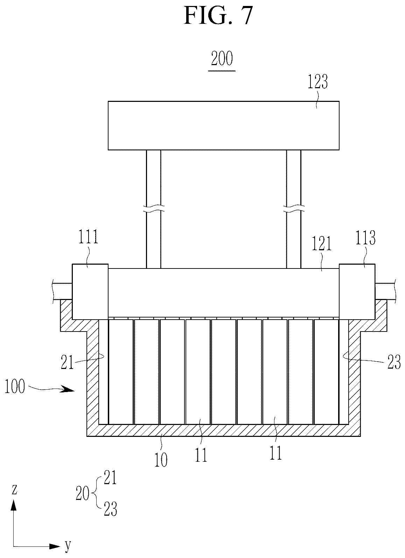

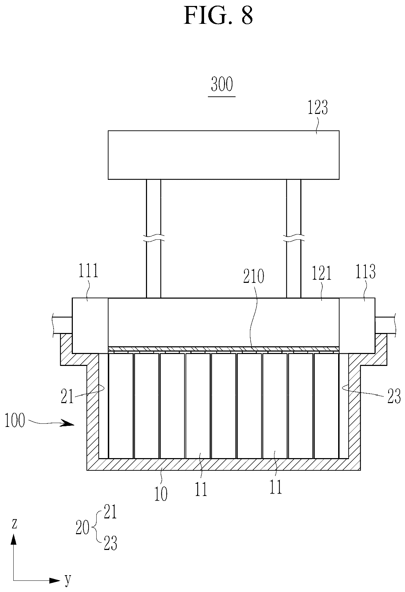

FIG. 8 is a cross-sectional view schematically showing a friction pad attached to a pressurizer of an apparatus for manufacturing a battery pack according to a second embodiment of the present disclosure. The reference numerals that are the same as in FIG. 1 to FIG. 7 indicate the same or similar members having the same or similar function. Hereinafter, components having the same reference numerals are not redundantly described in detail.

As shown in FIG. 8, a friction pad 210 according to a second embodiment of the present disclosure may be attached to a bottom surface of the pressurizing block 121 of an apparatus for manufacturing a battery pack 330.

The friction pad 210 may be attached to reduce formation of contact damage while the pressurizing block 121 is lowered to contact the upper portion of the battery cell 11. As such, by the attachment of the friction pad 210, the durability of the manufactured battery pack may be improved.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### <Description of symbols>

| | | | |
|---|---|---|---|
| 10: | battery housing | 11: | battery cell |
| 20: | guide portion, guide groove | 21: | first guide groove |
| 23: | second guide groove | 30: | upper cover |
| 100: | a battery pack | 110: | clamping portion |
| 111: | first gripper | 113: | second gripper |
| 115: | driver | 120: | pressurizer |
| 121: | pressurizing block | 123: | lift driver |
| 210: | friction pad | | |

## Claims

1. A battery pack (100, 200, 330), comprising:
a battery housing (10) including an internal receiving space;
a plurality of battery cells (11) accommodated in the internal receiving space of the battery housing (10) and arranged in an arrangement direction;
an upper cover (30) configured to cover an upper portion of the battery housing (10),
wherein a guide portion is formed on an inner wall surface of the battery housing (10) to guide insertion of the plurality of battery cells (11) into the internal receiving space.

2. The battery pack (100, 200, 330) of claim 1, wherein the guide portion is formed on a pair of opposing side inner wall surfaces of the battery housing (10), and the plurality of battery cells (11) are interposed between the pair of opposing side inner wall surfaces.

3. The battery pack (100, 200, 330) of claim 2, wherein the guide portion includes a guide groove that is formed on one of the side inner wall surface of the battery housing (10).

4. The battery pack (100, 200, 330) of claim 3, wherein the guide groove is a first guide groove (21) formed on an inner wall surface of a first side of the pair of opposing side inner wall surfaces of the battery housing (10), and
wherein the guide portion includes a second guide groove (23) formed on an inner wall surface of a second side of the pair of opposing side inner wall surfaces of the battery housing (10).

5. The battery pack (100, 200, 330) of claim 4, wherein the first guide groove (21) has a polygonal groove shape formed in a height direction of the battery housing (10), is formed on the inner wall surface of the first side, and is internally provided with an inserter.

6. The battery pack (100, 200, 330) of claim 5, wherein the second guide groove (23) has a polygonal groove shape formed in the height direction of the battery housing (10), is formed on the inner wall surface of the second side, and is internally provided with the inserter.

7. An apparatus for manufacturing a battery pack (100, 200, 330) by inserting the plurality of battery cells (11) inside the battery housing (10) of claim 1, the apparatus comprising:
a clamping portion (110) comprising a first gripper (111) inserted into the battery housing (10) and configured to pressurize a first side of the plurality of battery cells (11), and a second gripper (113) inserted into the battery housing (10) and configured to pressurize a second side of the plurality of battery cells (11), wherein the clamping portion (110) is configured to insert the plurality of battery cells (11) into the internal receiving space of the battery housing (10); and
a pressurizer (120) configured to pressurize upper portions of the plurality of battery cells (11) inserted into the battery housing (10) and thereby align the plurality of battery cells (11).

8. The apparatus of claim 7, wherein the first gripper (111) is configured to pressurize the first side of the plurality of battery cells (11), and inserted inside a first guide groove (21) formed on an inner wall surface of a first side of the battery housing (10),
wherein the second gripper (113) is configured to pressurize the second side of the plurality of battery cells (11), and inserted inside a second guide groove (23) formed on an inner wall surface of a second side opposite to the first side of the battery housing (10), with the plurality of battery cells (11) being interposed between the first side and the second side, and
wherein the clamping portion (110) further comprises a driver (115) configured to a driving force to the first gripper (111) and the second gripper (113).

9. The apparatus of claim 8, wherein the driver (115) is a cylinder member having a rod connected to the first gripper (111) and the second gripper (113).

10. The apparatus of claim 9, wherein the pressurizer (120) comprises:
a pressurizing block (121) configured to be liftable above the battery housing (10), and configured to pressurize the upper portions of the plurality of battery cells (11) when lowered; and
a lift driver (123) configured to provide a lifting force to the pressurizing block (121).

11. The apparatus of claim 10, wherein the lift driver (123) is a cylinder member having a rod connected to the pressurizing block (121) to provide a lifting force.

12. The apparatus of claim 11, wherein a friction pad (210) is attached to a bottom surface of the pressurizing block (121).

13. A method of manufacturing a battery pack (100, 200, 330), the method comprising:
clamping a plurality of battery cells (11) with a first gripper (111) and a second gripper (113);
inserting the plurality of battery cells (11) into an internal receiving space of a battery housing (10); and
pressurizing an upper portion of the plurality of battery cells (11) inserted into the battery housing (10) to align the plurality of battery cells (11).

14. The method of claim 13, wherein inserting the plurality of battery cells (11) into the internal receiving space of a battery housing (10) comprises:
inserting the first gripper (111) inside a first guide groove (21) formed on an inner wall surface of a first side of the battery housing (10); and
inserting the second gripper (113) inside a second guide groove (23) formed on an inner wall surface of a second side of the battery housing (10), the second side being opposite to the first side.

15. The method of claims 13 or 14, wherein pressurizing the upper portion of the plurality of battery cells (11) inserted into the battery housing (10) to align the plurality of battery cells (11) comprises lowering a pressurizing block (121) to contact the upper portions of the plurality of battery cells (11).
